# EUROPÄISCHE PATENTSCHRIFT

(11) **EP 2 561 019 B1**
(45) Veröffentlichungstag und Bekanntmachung des Hinweises auf die Patenterteilung: **17.05.2017**
(21) Anmeldenummer: 11715005.2
(22) Anmeldetag: 20.04.2011
(51) Int. Cl.: C08L 69/00, C09K 3/00

(54) **POLYMERES ANTISTATIKUM**
ANTISTATIC POLYMER
POLYMÈRE ANTISTATIQUE

(30) Priorität: 23.04.2010 DE 102010018235
(43) Veröffentlichungstag der Anmeldung: 27.02.2013
(73) Patentinhaber: Covestro Deutschland AG, 51373 Leverkusen (DE)
(72) Erfinder: HEUER, Helmut-Werner, 51371 Leverkusen (DE); WEHRMANN, Rolf, 47800 Krefeld (DE)
(74) Vertreter: Levpat
(86) Internationale Anmeldenummer: PCT/EP2011/056347
(87) Internationale Veröffentlichungsnummer: WO 2011/131728

(56) Entgegenhaltungen:
- EP-A2- 0 855 420
- JP-A- 6 228 420
- JP-A- 2008 255 224
- US-B1- 6 610 767

## Beschreibung

Die Anmeldung betrifft polymere Antistatika zur Verwendung in Polymer-Formmassen, sowie diese Antistatika enthaltende Formmassen, wobei die Antistatika gute Compoundierungseigenschaften aufweisen und sich preisgünstig herstellen lassen.

Bei Kunststofformkörpern ist die Anlagerung von Staub unter Ausbildung von Staubfiguren ein weit verbreitetes Problem. Siehe hierzu z.B. Saechtling, Kunststoff-Taschenbuch, 26. Ausgabe, Hanser Verlag, 1995, München, S. 140 f. Besonders störend und die Funktion einschränkend sind Staubablagerungen bei transparenten Formkörpern. Solche Formkörper werden zum Beispiel für den Bereich optische Datenspeicher, Elektrotechnik, Automobilbau, im Bausektor, für Flüssigkeitsbehälter oder für andere optische Anwendungen eingesetzt. Für all diese Anwendungen ist eine Staubanlagerung unerwünscht - inbesondere falls noch eine Lackierung der Formkörper erfolgt - und kann die Funktion beeinträchtigen.

Eine bekannte Methode die Staubanlagerung auf Kunststoffkörpern zu vermindern ist der Einsatz von Antistatika. In der Literatur sind für Thermoplasten Antistatika beschrieben (siehe z.B. Gächter, Müller, Plastic Additives, Hanser Verlag, München, 1996, S. 749 ff), welche die Staubanlagerung einschränken. Diese Antistatika verbessern die elektrische Leitfähigkeit der Kunststofformmassen und leiten so Oberflächenladungen, welche sich bei der Herstellung und beim Gebrauch bilden, ab. Somit werden Staubpartikel weniger angezogen und folglich gibt es eine geringere Staubanlagerung.

Bei den Antistatika unterscheidet man im allgemeinen zwischen internen und externen Antistatika. Ein externes Antistatikum wird nach der Verarbeitung auf den Kunststoffformkörper aufgetragen, ein internes Antistatikum wird als Additiv den Kunststoffformmassen zugesetzt. Aus wirtschaftlichen Gründen ist die Verwendung von internen Antistatika meist wünschenswert, da keine weiteren Arbeitsschritte zur Auftragung des Antistatikums nach der Verarbeitung nötig sind.

Die in der Literatur bislang für Thermoplasten, speziell für Polycarbonate beschrieben internen Antistatika haben meist einen oder mehrere der folgenden Nachteile:
- Molekulargewichtsabbau des Thermoplasten
- Wirksamkeit erst bei hohen Konzentrationen (>0.5 %)
- Trübung in transparenten Thermoplasten
- Nicht genügend wirksam um elektrostatische Entladung z.B. nach dem Verspritzen zu ermöglichen und damit Staubanlagerung zu vermeiden
- Verfärbungen, und
- insbesondere ein hoher Kostenfaktor

Eine häufig beschriebene Stoffklasse von Antistatika in Thermoplasten sind die Sulfonsäuresalze. Z.B. beschreibt JP-A 06228420 aliphatische Sulfonsäureammoniumsalze in Polycarbonat als Antistatikum. Diese Verbindungen, wie auch Phosphoniumsalze, führen jedoch zu Molekulargewichtsabbau.

Quarternäre Ammoniumsalze von Perfluoralkylsulfonsäuren und ebenso deren Verwendung in Thermoplasten als Antistatika sind bekannt, wie z.B. in EP 1 290 106 B1 und EP 1 210 388 B1.

Der Nachteil dieser Verbindungen besteht jedoch in ihrem zum einen hohen Preis und zum anderen in der oft mangelnden thermischen Stabilität der Verbindungen bei der Verarbeitung, die zu Abbauprodukten führt, die insbesondere Poylcarbonate stark schädigen.

Aufgabe der Erfindung ist daher die Bereitstellung von neuen Antistatika, die preisgünstig herzustellen sind und die Materialeigenschaften von Kunststoffen nicht negativ beeinflussen, sowie die Verwendung dieser Antistatika zur Herstellung thermoplastischer Zusammensetzungen und die Bereitstellung dieser Zusammensetzungen.

Es wurde überraschend gefunden, dass sich oligomere oder polymere Salze auf Diallyldialkylammoniumchlorid-Basis, insbesondere Diallydimethylammoniumchlorid (DADMAC)-Basis, einfach und kostengünstig herstellen lassen und ausgezeichnete antistatische Eigenschaften bei guter Thermostabilität aufweisen.

Der Gegenstand der vorliegenden Erfindung betrifft daher Antistatika auf Basis oligomerer oder polymerer Salze mit Polydiallyldialkylammonium-Verbindungen als Poly-Kationen und Säureanionen, das Verfahren zu ihrer Herstellung sowie mit diesen Verbindungen hergestellt thermoplastische Zusammensetzungen und die Verwendung dieser Verbindungen zur Herstellung von thermoplastischen Zusammensetzungen.

Die erfindungsgemäßen Antistatika haben eine Struktur nach Formel (I) 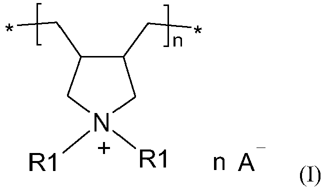 mit einem polymeren kationischen Elektrolytbestandteil hergestellt aus Diallyldialkylammonium-Verbindungen und anionischen Gegenionen (A⁻), wobei
- R1 gleich oder unabhängig voneinander C₁-C₁₈-Alkyl, vorzugsweise Methyl, Ethyl, Propyl, Isopropyl, Butyl, sek.-Butyl, tert.-Butyl, Pentyl, Neopentyl, Hexyl, Cyclohexyl oder Thexyl und besonders bevorzugt Methyl,
   und
- A⁻ ein Säureanion, und
- n eine ganze Zahl von 10 bis 1000 ist.

Aufgrund einer eventuell nicht vollständigen polymeranalogen Reaktion kann das Anion A⁻ auch einen Anteil nicht ausgetauschter Anionen wie Hydroxyl- oder Chloridionen enthalten. Dieser Anteil ist vorzugsweise kleiner als 10 %, weiter bevorzugt kleiner als 5 % und besonders bevorzugt kleiner als 1 %, wobei als Untergrenze jeweils 0 % zu verstehen ist.

A⁻ ist ein Sulfonsäureanion und weiter bevorzugte ist A⁻ ein Sulfonsäureanion nach Formel (II) 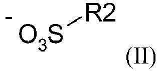 wobei R2 ausgewählt ist aus der Gruppe, die C₁-C₁₈-Alkyl, einfach oder mehrfach fluoriertes oder perfluoriertes C₁-C₁₈-Alkyl, C₂-C₈-Alkylether, wobei die Alkylkette mindestens eine Etherfunktion enthält und die Kohlenstoffatome optional vollständig oder partiell halogeniert sein können, Arylsulfonate, perfluorierte Arylsulfonate, arylsubstituierte Alkylsulfonate und arylsubstituierte Perfluoralkylsulfonate umfaßt.

In einer bevorzugten Ausführungsform ist R2 ein C₂-C₈-Alkyl oder Perfluoralkyl.

In einer weiteren bevorzugten Ausführungsform ist R2 ausgewählt aus der Gruppe, die 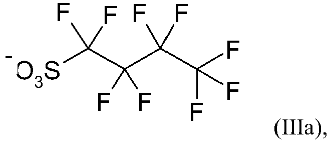 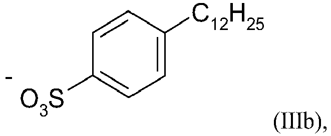 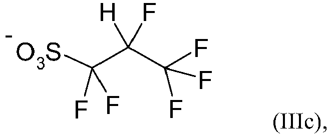 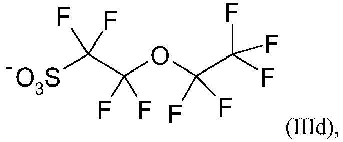 und 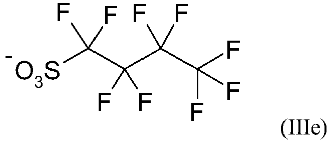 umfaßt.

Gegenstand der Anmeldung ist weiterhin ein Verfahren zur Darstellung der erfindungsgemäßen Antistatika umfassend die Schritte:
- Austausch des Anions des kationischen Polyelektrolybestandteils gegen Hydroxyl-Ionen.
- Neutralisation des modifizierten Polyelektrolytbestandteils mit der Säure der Komponente A,
- Waschen und Trocknen des ausgefallenen Antistatikums.

Diese Schritte sind beispielhaft im folgenden Reaktionsschema dargestellt

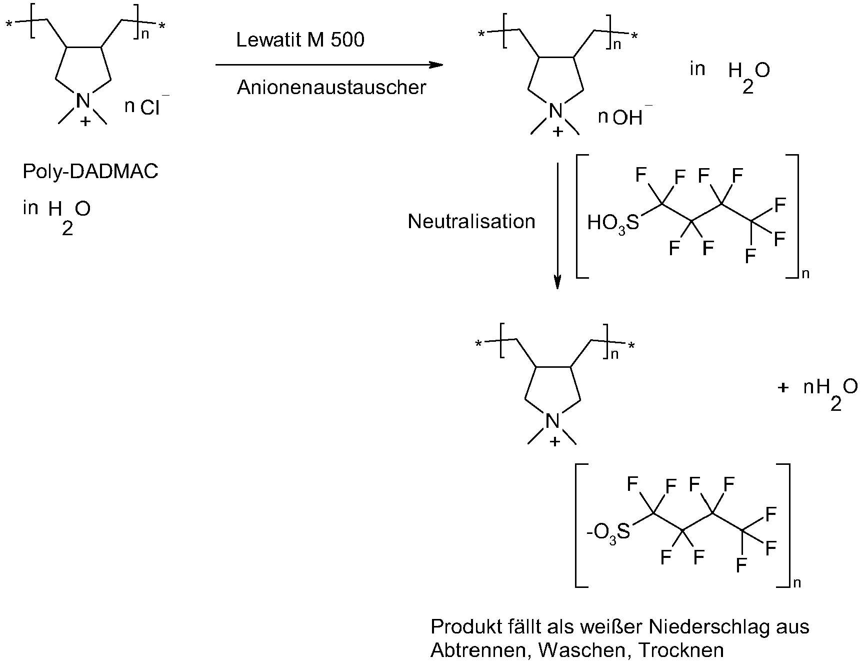

Ferner betrifft die vorliegende Erfindung thermoplastische Formmassen enthaltend:
- mindestens einem Thermoplasten und
- mindestens ein Antistatikum nach Formel (I) mit R1, A und n wie oben angegeben, und
- optional weitere üblicherweise verwendeter Polymeradditive.

Die Antistatika werden vorzugsweise in Mengen von 0,05 bis 5,00 Gew.%, bevorzugt von 0,1 bis 2,5 Gew.% und besonders bevorzugt von 0,2 Gew.% bis 1,5 Gew.% den Thermoplasten bezogen auf die Gesamtzusammensetzung zugesetzt.

Im Sinne der Erfindung geeignete Thermoplaste sind insbesondere aber nicht zwingend transparente Thermoplaste, bevorzugt die Polymerisate von ethylenisch ungesättigten Monomeren und/oder Polykondensate von bifunktionellen reaktiven Verbindungen, sowie Blends aus diesen thermoplastischen Komponenten zu verstehen.

Besonders geeignete Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS^{®}, TOPAS Advanced Polymers), Poly- oder Copolykondensate der Terephthalsäure, wie beispielhaft und vorzugsweise Poly- oder Copolyethylenterephthalat (PET oder CoPET) oder glycol-modifiziertes PET (PETG) oder Cyclobutandiolmodifizierte PET (z.B. Tritan^{®--}Typen von Eastman Chemicals) sowie mögliche Blends daraus.

Blends sind vorzugsweise PC/ABS, PC/ASA, PC/PBT und PC/PET.

Insbesonders bevorzugt sind Polycarbonate oder Copolycarbonate, insbesondere nicht halogenierten Polycarbonate und/oder Copolycarbonate mit Molekulargewichten M̅_{w} von 500 bis 100 000, bevorzugt von 10 000 bis 50 000, besonders bevorzugt von 15 000 bis 40 000.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Polycarbonate können sowohl in Schmelze, als auch in Lösung hergestellt sein.

Folgende Diphenole bei der Polycarbonatherstellung sind bevorzugte:
4,4'-Dihydroxydiphenyl, 2,2-Bis-(4-hydroxyphenyl)-propan (BPA), 2 , 4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan (TMC), 2,2-Bis-(3-methyl-4-hydroxyphenyl)-propan, 2-Methyl-3,3-bis(4-hydroxyphenyl)phthalimidin, 3,3-Bis(4-hydroxyphenyl)-1-phenyl-1H-indol-2-on, 2,2-Bis(4-hydroxyphenyl)-1-phenyl-1H-indol-3-on.

Besonders bevorzugte Diphenole sind 2,2-Bis-(4-hydroxyphenyl)-propan (BPA), 2,2-Bis-(3-methyl-4-hydroxyphenyl)-propan, 1,1-Bis-(4-hydroxyphenyl)-cyclohexan und 1,1-Bis-(4-hydroxyphenyl)-3,3,5-trimethylcyclohexan (TMC), 4 , 4 '-Dihydroxydiphenyl (DOD), 2-Methyl-3,3-bis(4-hydroxyphenyl)phthalimidin, 3,3-Bis(4-hydroxyphenyl)-1-phenyl-1H-indol-2-on, 2,2-Bis(4-hydroxyphenyl)-1-phenyl-1H-indol-3-on.

Bevorzugte Verzweiger sind Triphenole wie z. B. 1,1,1-Tris-(4-hydroxyphenylethan) (THPE), Trimesinsäure(trichlorid), Cyanursäuretrichlorid und 3,3-Bis-(3-methyl-4-hydroxyphenyl)-2-oxo-2,3-dihydroindol (IBK).

Im Sinne der Erfindung ist zur Erreichung von verbesserten Kunststoffzusammensetzungen möglich, dass zusätzlich noch mindestens ein weiterer in thermoplastischen Kunststoffen, bevorzugt Poly- und Copolycarbonaten, üblicherweise vorhandener Zusatzstoff vorhanden ist.

Die den erfindungsgemäßen Zusammensetzungen gegebenenfalls zugesetzten Entformungsmittel sind bevorzugt ausgewählt aus der Gruppe, die Pentaerythrittetrastearat und Glycerinmonostearat sowie Carbonate von Teilestern dieser Verbindungen (z.B. Glycerinmonostearat-Carbonat), Stearylstearat und Propandiolstearat sowie deren Mischungen umfaßt.

In einer bevorzugten Ausführungsform können die veresterten ungesättigten Fettsäuren auch ganz oder teilweise epoxidiert sein.

Die Entformungsmittel werden eingesetzt in Mengen von 0,05 Gew.-% bis 2,00 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Gesamtzusammensetzung.

Als primäre Antioxidantien kommen bevorzugt sterisch gehinderte Phenole (z. B. Irganox-Typen der Fa. Ciba, beispielsweise Irganox 1076 (Octadecyl-3-(3,5-di-tert.butyl-4-hydroxyphenyl)-propionat), Irganox 1010 (Pentaerythritol-tetrakis(3-(3,5-di-tert.butyl-4-hydroxyphenyl)-propionat) oder Irganox 1035 (Thiodiethylen bis (3-(3,5-di-tert.butyl-4-hydroxyphenyl)-propionat)) zum Einsatz.

Optional zugesetzte Thermostabilisatoren sind ausgewählt aus der Gruppe die
- Triphenylphosphin (TPP),
- PEPQ: Irgafos P PEPQ; dimeres Phosphonit der Fa. BASF/Ciba (CAS-Nr. 119345-01-6),
- Irgafos® 168: BASF (CAS-Nr. 31570-04-4),
- Irganox® B900: Gemisch aus Irgafos 168 und Irganox 1076 (sterisch gehindertes Phenol / CAS-Nr. 2082-79-3) im Verhältnis 4:1 der Fa. BASF, und
- Doverphos S 9228-PC: Fa. Dover, USA (CAS-Nr. 154862-43-8)
umfaßt.

Ferner können die erfindungsgemäßen Zusammensetzungen übliche Additive wie andere Thermostabilisatoren, Antistatika, Farbmittel, Fließhilfsmittel und Flammschutzmittel enthalten.

Als optionale Flammschutzmittel, sind insbesondere organische, phosphorhaltige Flammschutzmittel wie Bisphenol-A-Diphosphat, halogenierte Flammschutzmittel wie Tetrabrom-bisphenol-A-Oligocarbonat, Alkali- und Erdalkalisalzen von aliphatischen und aromatischen Sulfonsäure-, Sulfonamid- und Sulfonimidderivaten bevorzugt.

UV-Absorber sind beispielhaft und vorzugsweise ausgewählt aus der Gruppe der Hydroxy-Benzotriazole und Hydroxytriazine.

Ferner können den Zusammensetzungen optional Füllmittel, Schaummittel, Farbstoffen, Pigmente, optische Aufheller, Umesterungskatalysatoren und Nukleierungsmittel zugesetzt werden.

Die Gesamtmenge der Zusatzstoffe in den Zusammensetzunge beträgt vorzugsweise 0,01 bis 15,00 Gew.%, weiter bevorzugt 0,05 bis 10,00 Gew.%, und besonders bevorzugt 0,10 bis 5,00 Gew.%, bezogen auf das Gesamtgewicht der Zusammensetzung.

Die Einarbeitung der erfindungsgemäßen Antistatika sowie gegebenenfalls der Zusatzstoffe oder Mischungen der Zusatzstoffe erfolgt in allgemein üblicher Weise zum Beispiel vor oder während der Polymerisation oder durch nachträgliches Vermischen mit dem thermoplastischen Kunststoff.

Die so erhaltenen Kunststoffzusammensetzungen liegen im allgemeinen in Form von Lösungen Dispersionen, Emulsionen, Stäuben, Pulvern, Granulaten, Plättchen oder Schuppen vor (Formmassen) und werden zur Herstellung von geformten Gegenständen (Formkörper) verwendet.

Geformte Gegenstände sind beispielhaft und vorzugsweise lichtdurchlässige Gegenstände wie beispielhaft und vorzugsweise Lichtstreuscheiben für Kraftfahrzeuge, Kunststoffabdeckscheiben für Beleuchtungselemente und Scheinwerfer, Linsen wie z.B. Brillengläser, Folien, Bändchen, Platten, Stegplatten, Stegmehrfachplatten, Gefäße, Rohre und sonstige Profile die nach den üblichen Methoden, wie z.B. Heißpressen, Spinnen, Extrudieren oder Spritzgießen hergestellt werden. Die Polymerzusammensetzungen können auch zu Gießfolien verarbeitet werden.

Von Interesse ist auch die Verwendung der erfindungsgemäßen Kunststoffzusammensetzung zur Herstellung von Mehrschichtsystemen und Laminaten. Hierbei wird die erfindungsgemäße Kunststoffzusammensetzung in dünner Schicht in Form eines Masterbatches auf einen geformten Gegenstand aus einem Kunststoff welcher nicht antistatisch ausgerüstet ist, aufgebracht. Das Aufbringen kann zugleich mit oder unmittelbar nach der Formgebung des Formkörpers geschehen, zum Beispiel durch Coextrusion oder Mehrkomponentenspritzguß. Das Aufbringen kann aber auch auf den fertig geformten Grundkörper geschehen, z.B. durch Lamination mit einem Film oder durch Beschichtung mit einer Lösung.

Bevorzugt werden die die erfindungsgemäßen Antistatika enthaltenden Kunststoffzusammensetzungen zur Herstellung von Lichtstreuscheiben für Kraftfahrzeuge und Kunststoffabdeckscheiben für Beleuchtungselemente und Scheinwerfer, verwendet.

Von besonderem Interesse ist auch die Verwendung der die erfindungsgemäßen Antistatika enthaltenden Kunststoffzusammensetzungen zur Herstellung von Platten, Stegdoppelplatten, Coexplatten und Folien. Ferner ist von Interesse die Verwendung der erfindungsgemäßen Antistatika in flammgeschützten thermoplastischen Formmassen.

Der Vorteil der mit den erfindungsgemäßen Antistatika ausgerüsteten Kunststoffformkörper ist, dass diese sich nicht mehr, z. B. bei der Herstellung, beim Abziehen der üblicherweise verwendeten Schutzfolien oder Transport und Lagerung, elektrostatisch aufladen.

Die erfindungsgemäßen Antistatika sind besonders geeignet für transparente Einstellungen der Thermoplasten, doch lassen sich auch gedeckte Einstellungen mit Hilfe dieser Zusätze antistatisch ausrüsten.

Die nachfolgenden Beispiele dienen zur Erläuterung der Erfindung. Die Erfindung ist nicht auf die Beispiele beschränkt. Prozentangaben bedeuten im folgenden Gewichtsprozente.

### Beispiele

### Staubtest

Um die Staubanlagerung im Laborversuch zu untersuchen, werden die gespritzten Platten, einer Atmosphäre mit aufgewirbeltem Staub ausgesetzt. Dazu wird ein 2-1-Becherglas mit einem 80 mm langen Magnetrührstab mit dreieckigem Querschnitt mit Staub (Kohlenstaub / 20 g Aktivkohle, Riedel-de Haen, Seelze, Deutschland, Artikel Nr. 18003) ca. 1 cm hoch gefüllt. Mit Hilfe eines Magnetrührers wird der Staub aufgewirbelt. Nach dem Stoppen des Rührers wird der Probekörper 10 sec. lang dieser Staubatmosphäre ausgesetzt. Je nach verwendetem Probekörper setzt sich mehr oder weniger Staub auf den Probekörpern ab.

Die Beurteilung der Staubanlagerungen (Staubfiguren) wird visuell durchgeführt. Platten, welche Staubfiguren aufwiesen wurden negativ (-) bewertet, praktisch staubfigurenfreie Platten mit (+) bewertet.

### Verwendete Rohstoffe:

**PC 1** ist ein Polycarbonat auf Basis von Bisphenol A und Phosgen mit einer Lösungsviskosität von 1,26.

Die Lösungsviskosität wurde an einer Polycarbonatlösung, bestehend aus 0,5 g Polymer/l in Methylenchlorid, bei 25°C mit einem Ubbelohde-Viskosimeter bestimmt.

**Das Antistatikum** wurde nach folgender Vorschrift hergestellt.

Poly-DADMAC (Abkürzung für Polydiallyldimethylammoniumchlorid, siehe Struktur (IV), CAS-Nr. 26062-79-3) ist ein Polyelektrolyt in wässriger Lösung, welcher kommerziell verfügbar ist.

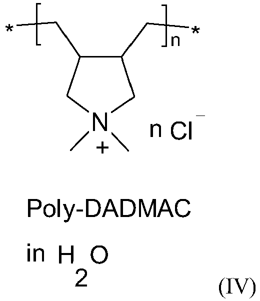

150 g einer wässrigen Poly-DADMAC-Lösung (Aldrich, 35%-ig in Wasser, Mw < 100.000 g/mol, mit einer Viskosität von 100 - 200 cP wurde mehrmals über den Ionenaustauscher Lewatit® M 500 behandelt. Der Ionenaustauscher wurde vorher mit Natronlauge regeneriert und mit destilliertem Wasser neutral gewaschen.

Die verdünnte Lösung des Polyelektrolyten wurde am Rotationsverdampfer eingeengt. Dabei blieb ein leicht gelbliches, kristallines Produkt übrig.

75 g Nonafluorbutan-1-sulfonsäure (97%-ig, Aldrich) wurde in 350 ml destilliertem Wasser gelöst.

Der nach Ionenaustausch eingedampfte Polyelektrolyt wurde in 200 ml destilliertem Wasser wieder aufgelöst. Der anfängliche pH-Wert betrug 12,7.

Mit der Säurelösung aus Nonafluorbutan-1-sulfonsäure wurde anschließend gegen den Neutralpunkt von pH-Wert 7 titriert (Säure-Base-Reaktion). Dabei wurden 230 ml der Säurelösung verbraucht. Beim Neutralstellen fiel dabei ein weißliches, sehr feines Produkt aus. Diese feine Suspension wurde abgesaugt und mehrmals mit destilliertem Wasser gewaschen. Das so erhaltene Produkt wurde abschließend im Trockenschrank bei 100°C im Vakuum getrocknet.

Ausbeute 51,7 g eines weißen Feststoffes.

### Herstellung von Probekörper

Zur Herstellung der Probekörper wurde Polycarbonat PC1 bei 280°C auf einem Zweiwellenextuder mit der in Tabelle 1 angegebenen Menge von Sulfonsäuresalzen (gemäß Beispiel 1 und 2 sowie dem Vergleichsbeispiel) (Tabelle 1) vermischt/compoundiert.

Aus diesem Granulat wurden anschließend Rechteckplatten bei 300 °C Massetemperaturen abgespritzt (155 mm x 75 mm x 2 mm).

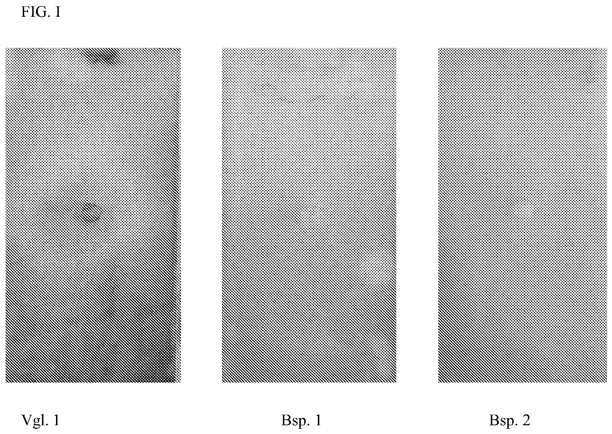

Anschließend wurden die Rechteckplatten dem Staubtest unterzogen. Die Ergebnisse sind in Tabelle 1 angegeben und in Fig.1 zu sehen.

**Tabelle 1: Kunststoffzusammensetzungen und Staubstest**

| **Ergebnisse:** | | **Vergleich 1** | **Bsp. 1** | **Bsp. 2** |
|---|---|---|---|---|
| Antistatikum -Gehalt | Gew.% | - | 0,25 | 0,75 |
| Polycarbonat | Gew.% | 100 | 99,75 | 99,25 |
| **Bewertung Staubtest** | | - | + | + |

Man erkennt deutlich, dass das Vergleichsbeispiel ohne Additiv im Vergleich zu den erfindungsgemäßen Beispielen noch signifikanten Mengen an Ruß anzieht. Die Probe mit 0,25 Gew.-% des Antistatikadditivs aus Beispiel 1 zeigt bereits nahezu keine Belegung mit Ruß. Die erfindungsgemäßen Antistatika weisen somit gute antistatische Eigenschaften auf. Sie sind einfach und preisgünstig herzustellen, sind thermostabil und bewirken keine zusätzliche Vergilbung der Zusammensetzungen.

## Patentansprüche

1. Antistatikum der allgemeinen Formel (I) 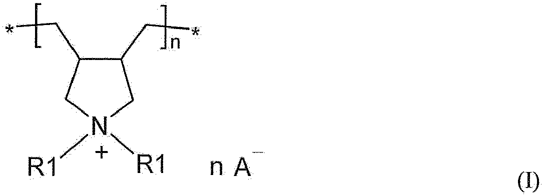 mit einem polymeren kationischen Polyelektrolytbestandteil hergestellt aus Diallyldialkylammonium-Verbindungen und einem anionischen Gegenion A⁻, wobei
- R1 gleich oder unabhängig voneinander C₁-C₁₈-Alkyl,
- A⁻ ein Sulfonsäureanion und
- n eine ganze Zahl von 10 bis 1000 ist.

2. Antistatikum nach Anspruch 1, **dadurch gekennzeichnet, dass** R1 gleich oder unabhängig voneinander ausgewählt ist aus der Gruppe, die Methyl, Ethyl, Propyl, Isopropyl, Butyl, sek.-Butyl, tert.-Butyl, Pentyl, Neopentyl, Hexyl, Cyclohexyl und Thexyl umfasst.

3. Antistatikum nach Anspruch 1 oder 2, **dadurch gekennzeichnet, dass** A⁻ ein Sulfonsäureanion nach Formel (II) ist, 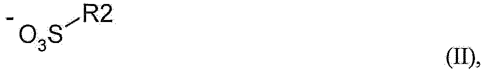 wobei R2 ausgewählt ist aus der Gruppe, die C₁-C₁₈-Alkyl, einfach, mehrfach fluoriertes C₁-C₁₈-Alkyl, perfluoriertes C₁-C₁₈-Alkyl, C₂-C₈-Alkylether, wobei die Alkylkette mindestens eine Etherfunktion enthält, vollständig oder partiell halogenierte C₂-C₈-Alkylether, wobei die Alkylkette mindestens eine Etherfunktion enthält, Arylsulfonate, perfluorierte Arylsulfonate, arylsubstituierte Alkylsulfonate und arylsubstituierte Perfluoralkylsulfonate umfasst.

4. Antistatikum nach Anspruch 1 oder 2, **dadurch gekennzeichnet, dass** A⁻ Perfluorbutansulfonat ist.

5. Verwendung des Antistatikums nach Anspruch 1 zur antistatischen Ausrüstung thermoplastischer Zusammensetzungen.

6. Thermoplastische Zusammensetzungen enthaltend
- mindestens einen thermoplastischen Kunststoff,
- mindestens ein Antistatikum nach Anspruch 1 und
- optional weitere übliche Additive.

7. Thermoplastische Zusammensetzung nach Anspruch 6, **dadurch gekennzeichnet, dass** das Antistatikum in Mengen von 0,05 - 5,00 Gew.%, bezogen auf die Gesamtzusammensetzung, enthalten ist.

8. Thermoplastische Zusammensetzung nach Anspruch 6, **dadurch gekennzeichnet, dass** der thermoplastische Kunststoff ein Thermoplast ist, ausgewählt aus der Gruppe, die die Polymerisate von ethylenisch ungesättigten Monomeren und Polykondensate von bifunktionellen reaktiven Verbindungen sowie deren Mischungen umfasst.

9. Thermoplastische Zusammensetzung nach Anspruch 6, **dadurch gekennzeichnet, dass** der thermoplastische Kunststoff Polycarbonat ist.

10. Verwendung von Antistatika nach einem der Ansprüche 1-5 enthaltenden Kunststoffzusammensetzungen zur Herstellung von Formkörpern.

11. Verfahren zur Herstellung von antistatisch wirkenden Formkörpern, umfassend die Schritte:
a) Herstellung eines Antistatikums nach einem der Ansprüche 1-5
- Austausch des Anions des kationischen Polyelektrolybestandteils gegen Hydroxyl-Ionen,
- Neutralisation des modifizierten Polyelektrolytbestandteils mit der Säure der Komponente A,
- Waschen und Trocknen des ausgefallenen Antistatikums,
b) Compoundieren des Antistatikums mit einem thermoplastischen Polymer,
c) Herstellung des Formkörpers durch Spritzguss oder Extrusion.

12. Kunststoffformkörper enthaltend mindestens ein Antistatikum nach einem der Ansprüche 1-5.

13. Masterbatch enthaltend ein thermoplastisches Polymer und das Antistatikum nach einem der Ansprüche 1-5 in einem Anteil von 1-10 Gew.%, bezogen auf die Gesamtmasse des Masterbatches.

## Claims

1. Antistatic agent of the general formula (I) 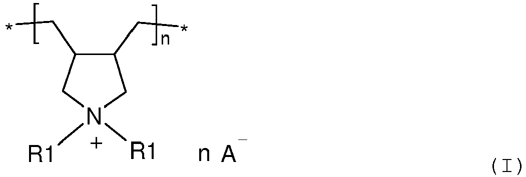 having a polymeric cationic polyelectrolyte constituent produced from diallyldialkylammonium compounds and an anionic counterion A⁻, in which
- R1 is uniformly or mutually independently C₁-C₁₈ alkyl,
- A⁻ is a sulfonic acid anion, and
- n is a whole number from 10 to 1000.

2. Antistatic agent according to claim 1, **characterised in that** R1 is uniformly or mutually independently selected from the group comprising methyl, ethyl, propyl, isopropyl, butyl, sec-butyl, tert-butyl, pentyl, neopentyl, hexyl, cyclohexyl and thexyl.

3. Antistatic agent according to claim 1 or 2, **characterised in that** A⁻ is a sulfonic acid anion according to formula (II), 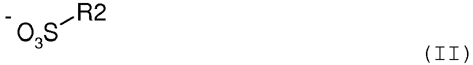 in which R2 is selected from the group comprising C₁-C₁₈ alkyl, mono- or polyfluorinated C₁-C₁₈ alkyl, perfluorinated C₁-C₁₈ alkyl, C₂-C₈ alkyl ethers, wherein the alkyl chain contains at least one ether function, wholly or partially halogenated C₂-C₈ alkyl ethers, wherein the alkyl chain contains at least one ether function, aryl sulfonates, perfluorinated aryl sulfonates, aryl-substituted alkyl sulfonates and aryl-substituted perfluoroalkyl sulfonates.

4. Antistatic agent according to claim 1 or 2, **characterised in that** A⁻ is perfluorobutane sulfonate.

5. Use of the antistatic agent according to claim 1 for the antistatic treatment of thermoplastic compositions.

6. Thermoplastic compositions containing
- at least one thermoplastic material,
- at least one antistatic agent according to claim 1 and
- optionally further conventional additives.

7. Thermoplastic composition according to claim 6, **characterised in that** the antistatic agent is included in amounts from 0.05 to 5.00 wt.%, relative to the total composition.

8. Thermoplastic composition according to claim 6, **characterised in that** the thermoplastic material is a thermoplastic selected from the group comprising the polymers of ethylenically unsaturated monomers and polycondensates of bifunctional reactive compounds and mixtures thereof.

9. Thermoplastic composition according to claim 6, **characterised in that** the thermoplastic material is polycarbonate.

10. Use of plastic compositions containing antistatic agents according to one of claims 1 to 5 for the production of mouldings.

11. Method for producing mouldings having an antistatic effect, comprising the following steps:
a) Production of an antistatic agent according to one of claims 1 to 5
- Exchange of the anion of the cationic polyelectrolyte constituent for hydroxyl ions,
- Neutralisation of the modified polyelectrolyte constituent with the acid of component A,
- Washing and drying of the precipitated antistatic agent,
b) Compounding of the antistatic agent with a thermoplastic polymer,
c) Production of the moulding by injection moulding or extrusion.

12. Plastic moulding containing at least one antistatic agent according to one of claims 1 to 5.

13. Masterbatch containing a thermoplastic polymer and the antistatic agent according to one of claims 1 to 5 in a proportion of 1 to 10 wt.%, relative to the total mass of the masterbatch.

## Revendications

1. Antistatique de formule générale (I) 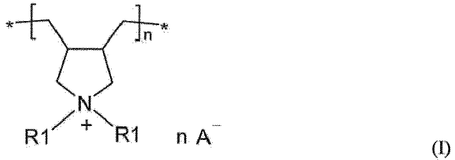 comprenant un constituant polyélectrolyte cationique polymère fabriqué à partir de composés de diallyldialkylammonium et un contre-ion anionique A⁻,
- les R1 représentant de manière identique ou indépendamment les uns des autres alkyle en C₁-C₁₈,
- A⁻ représentant un anion d'acide sulfonique et
- n étant un nombre entier de 10 à 1 000.

2. Antistatique selon la revendication 1, **caractérisé en ce que** les R1 sont choisis de manière identique ou indépendamment les uns des autres dans le groupe qui comprend méthyle, éthyle, propyle, isopropyle, butyle, sec.-butyle, tert.-butyle, pentyle, néopentyle, hexyle, cyclohexyle et thexyle.

3. Antistatique selon la revendication 1 ou 2, **caractérisé en ce que** A⁻ est un anion d'acide sulfonique de formule (II) 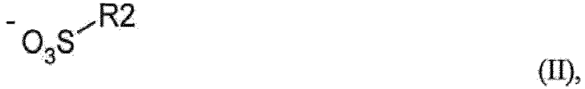 dans laquelle R2 est choisi dans le groupe qui comprend alkyle en C₁-C₁₈, alkyle en C₁-C₁₈ mono-, polyfluoré, alkyle en C₁-C₁₈ perfluoré, éther alkylique en C₂-C₈, la chaîne alkyle contenant au moins une fonction éther, éther alkylique en C₂-C₈ entièrement ou partiellement halogéné, la chaîne alkyle contenant au moins une fonction éther, les sulfonates d'aryle, les sulfonates d'aryle perfluorés, les sulfonates d'alkyle à substitution aryle et les sulfonates de perfluoroalkyle à substitution aryle.

4. Antistatique selon la revendication 1 ou 2, **caractérisé en ce que** A⁻ est le sulfonate de perfluorobutane.

5. Utilisation de l'antistatique selon la revendication 1 pour le traitement antistatique de compositions thermoplastiques.

6. Compositions thermoplastiques contenant :
- au moins un plastique thermoplastique,
- au moins un antistatique selon la revendication 1 et
- éventuellement d'autres additifs usuels.

7. Composition thermoplastique selon la revendication 6, **caractérisée en ce que** l'antistatique est contenu en quantités de 0,05 à 5,00 % en poids, par rapport à la composition totale.

8. Composition thermoplastique selon la revendication 6, **caractérisée en ce que** le plastique thermoplastique est un thermoplastique, choisi dans le groupe qui comprend les polymères de monomères éthyléniquement insaturés et les polycondensats de composés réactifs bifonctionnels, ainsi que leurs mélanges.

9. Composition thermoplastique selon la revendication 6, **caractérisée en ce que** le plastique thermoplastique est un polycarbonate.

10. Utilisation de compositions plastiques contenant des antistatiques selon l'une quelconque des revendications 1 à 5 pour la fabrication de corps moulés.

11. Procédé de fabrication de corps moulés à effet antistatique, comprenant les étapes suivantes :
a) la fabrication d'un antistatique selon l'une quelconque des revendications 1 à 5
- le remplacement de l'anion du constituant polyélectrolyte cationique par des ions hydroxyle,
- la neutralisation du constituant polyélectrolyte modifié avec l'acide du composant A,
- le lavage et le séchage de l'antistatique précipité,
b) le mélange de l'antistatique avec un polymère thermoplastique,
c) la fabrication du corps moulé par moulage par injection ou extrusion.

12. Corps moulé en plastique contenant au moins un antistatique selon l'une quelconque des revendications 1 à 5.

13. Mélange maître contenant un polymère thermoplastique et l'antistatique selon l'une quelconque des revendications 1 à 5 en une proportion de 1 à 10 % en poids, par rapport à la masse totale du mélange maître.
